(19) Europäisches Patentamt
European Patent Office
Office européen des brevets

(11) **EP 3 822 872 A1**

(12) **EUROPEAN PATENT APPLICATION**
published in accordance with Art. 153(4) EPC

(43) Date of publication:
**19.05.2021 Bulletin 2021/20**

(51) Int Cl.:
*G06N 99/00* (2019.01)      *G06F 8/00* (2018.01)
*G06N 3/12* (2006.01)      *G06T 7/00* (2017.01)

(21) Application number: **18926217.3**

(22) Date of filing: **09.07.2018**

(86) International application number:
**PCT/JP2018/025849**

(87) International publication number:
**WO 2020/012523 (16.01.2020 Gazette 2020/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **FUJITSU LIMITED**
**Kanagawa 211-8588 (JP)**

(72) Inventors:
• **OKAMOTO, Hiroaki**
  **Kawasaki-shi, Kanagawa 211-8588 (JP)**
• **NAGATO, Tsuyoshi**
  **Kawasaki-shi, Kanagawa 211-8588 (JP)**
• **KOEZUKA, Tetsuo**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57)     In order to reduce a processing amount when a defective-mode-included quality determination identifier is generated, a program generation unit generates a defective-mode-included quality determination identifier that automatically generates an image classification program (quality determination program) that classifies learning images classified into two classes in advance into two classes on the basis of genetic programming, gives the learning images classified into three or more classes in advance to the automatically generated quality determination program, and classifies the learning images into three or more classes.

FIG. 4

(a) LEARNING CORRECT DATA

| IMAGE FILE | CORRECT ANSWER |
|---|---|
| file001 | +1 |
| file002 | +1 |
| file003 | -1 |
| file004 | -2 |
| file005 | -1 |
| ... | ... |
| file100 | -3 |

(b) CORRECT DATA FOR QUALITY DETERMINATION AUTOMATIC GENERATION

| IMAGE FILE | CORRECT ANSWER |
|---|---|
| file001 | +1 |
| file002 | +1 |
| file003 | -1 |
| file004 | -1 |
| file005 | -1 |
| ... | ... |
| file100 | -1 |

(c)
IMAGE CONVERSION PROCESSING
↓
IMAGE FEATURE EXTRACTION PROCESSING
↓
IDENTIFIER HYPERPARAMETER SETTING PROCESSING
↓
QUALITY DETERMINATION IDENTIFIER

TREE STRUCTURE FILTER SEQUENCE

(d)
IMAGE CONVERSION PROCESSING
↓
IMAGE FEATURE EXTRACTION PROCESSING
↓
IDENTIFIER HYPERPARAMETER SETTING PROCESSING
↓
DEFECTIVE-MODE-INCLUDED QUALITY DETERMINATION IDENTIFIER

TREE STRUCTURE FILTER SEQUENCE

EP 3 822 872 A1

Printed by Jouve, 75001 PARIS (FR)

**Description**

TECHNICAL FIELD

The present embodiments discussed herein are related to an information processing device, an information processing method, and an information processing program.

BACKGROUND ART

There is conventionally a technique for automatically generating an image processing program for executing desired image processing by genetic programming. The technique uses an input image and a target processing result (target image or the like) to optimize the image processing program by the genetic programming.

Furthermore, as a type of automatic generation of the image processing program, a method has been proposed of automatically generating an image classification program that performs class classification of images (category classification) (for example, refer to Patent Document 1, and the like). By using the image classification program, for example, objects imaged in the images can be classified into two classes, a non-defective product and a defective product.

CITATION LIST

PATENT DOCUMENT

Patent Document 1: International Publication Pamphlet No. WO 2017/068675

SUMMARY OF INVENTION

TECHNICAL PROBLEM

As described above, it is useful if it is possible to classify the objects imaged in the images into multiple classes according to a degree of a non-defective product and a defective mode (type of defect) not only to classify the objects into two classes including the non-defective product and the defective product. A typical identifier that can perform the multi-class classification is, for example, a Support Vector Machine (SVM) identifier or the like.

However, in a case where the SVM identifier that classifies the objects into two classes is extended to multiple classes and an image classification program is automatically generated, a processing amount to create the SVM identifier increases in the order of the square of the number of classes, and an entire learning time greatly increases.

In one aspect, an object of the present invention is to provide an information processing device, an information processing method, and an information processing program that can reduce a processing amount when a multi-class image classifier is generated.

SOLUTION TO PROBLEM

According to one aspect, an information processing device that automatically generates an image classification program in which element filters are combined on a basis of genetic programming, the information processing device includes a first generation unit that automatically generates an image classification program that classifies a first learning image group classified into two classes in advance into the two classes on a basis of the genetic programming and a second generation unit that generates a multi-class image classifier that gives a second learning image group classified into three or more classes in advance to the image classification program automatically generated by the first generation unit and classifies the second learning image group into the three or more classes.

ADVANTAGEOUS EFFECTS OF INVENTION

A processing amount when a multi-class image classifier is generated can be reduced.

BRIEF DESCRIPTION OF DRAWINGS

FIG. 1 is a diagram illustrating an example of a hardware configuration of an image classification device according to a first embodiment.

FIG. 2 is a diagram illustrating an example of a basic configuration of a tree structure filter sequence of an individual handled in genetic programming.

FIG. 3 is a diagram for explaining an outline of image classification program generation processing by the genetic programming.

FIGs. 4(a) to 4(d) are diagrams for explaining an outline of processing in the first embodiment.

FIGs. 5A to 5C are diagrams for explaining generation processing of a defective-mode-included quality determination identifier.

FIG. 6 is a block diagram illustrating an example of a configuration of processing functions of the image classification device.

FIG. 7 is a flowchart illustrating an example of a processing procedure of a program generation unit.

FIGs. 8A to 8C are diagrams illustrating verification experiment results of the defective-mode-included quality determination identifier generated along the flowchart in FIG. 7.

FIGs. 9(a) to 9(c) are diagrams for explaining a second embodiment.

FIG. 10 is a diagram for explaining a third embodiment.

FIG. 11 is a diagram for explaining a fourth embodiment.

FIG. 12 is a diagram for explaining a modification.

DESCRIPTION OF EMBODIMENTS

[First Embodiment]

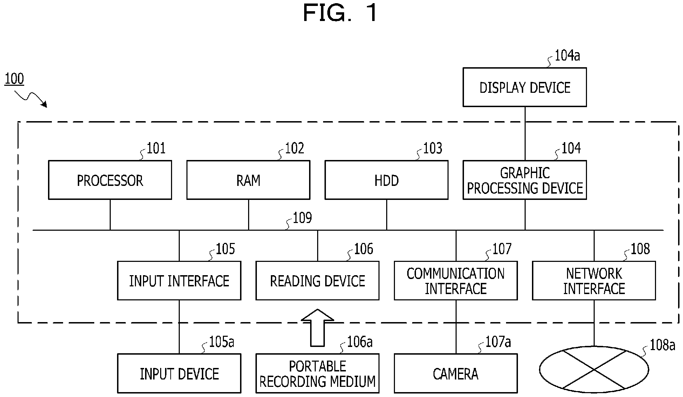

Hereinafter, a first embodiment of an image classification device as an information processing device will be described in detail with reference to FIGs. 1 to 8C. The image classification device according to the first embodiment has a function of automatically generating an image classification program in which element filters are combined, on the basis of genetic programming, and a function of executing the generated image classification program to execute image classification processing.

FIG. 1 is a diagram illustrating an example of a hardware configuration of an image classification device 100 according to the first embodiment. The image classification device 100 includes a processor 101, a RAM 102, an HDD 103, a graphic processing device 104, an input interface 105, a reading device 106, a communication interface 107, and a network interface 108. Each unit of the image classification device 100 is connected to a bus 109.

The processor 101 controls the entire image classification device 100. The processor 101 may also be a multiprocessor. The processor 101 is, for example, a central processing unit (CPU), a micro processing unit (MPU), a digital signal processor (DSP), an application specific integrated circuit (ASIC), a programmable logic device (PLD), or the like. Furthermore, the processor 101 may be a combination of two or more elements of a CPU, an MPU, a DSP, an ASIC, and a PLD.

The RAM 102 is used as a main storage device of the image classification device 100. The RAM 102 temporarily stores at least a part of an operating system (OS) program or an application program to be executed by the processor 101. Furthermore, the RAM 102 stores various data required for processing by the processor 101.

The HDD 103 is used as an auxiliary storage device of the image classification device 100. The HDD 103 stores the OS program, the application program, and various data. Note that, the auxiliary storage device can be implemented by another type of nonvolatile storage device such as a solid state drive (SSD).

The graphic processing device 104 is connected to a display device 104a. The graphic processing device 104 displays an image on a screen of the display device 104a in accordance with a command from the processor 101. Examples of the display device include a liquid crystal display, an organic ElectroLuminescence (EL) display, or the like.

The input interface 105 is connected to an input device 105a. The input interface 105 transmits a signal output from the input device 105a to the processor 101. Examples of the input device 105a include a keyboard, a pointing device, and the like. Examples of the pointing device include a mouse, a touch panel, a tablet, a touch pad, a track ball, and the like.

A portable recording medium 106a is attached/detached to/from the reading device 106. The reading device 106 reads data recorded in the portable recording medium 106a and transmits the data to the processor 101. Examples of the portable recording medium 106a include an optical disk, a magneto-optical disk, a semiconductor memory, and the like.

The communication interface 107 transmits/receives data to/from a connected external device. In the first embodiment, a camera 107a, as an external device, is connected to the communication interface 107, and the communication interface 107 transmits image data transmitted from the camera 107a to the processor 101.

The network interface 108 transmits/receives data to/from another device via the network 108a.

The image classification device 100 automatically generates an image classification program that classifies an input image into one of two classes, by the genetic programming. The image classification processing based on the generated image classification program includes, for example, processing of determining whether a product or part imaged in the input image is a non-defective product or a defective product, processing of determining whether or not a face is imaged in the input image, and the like.

Processing implemented by the image classification program includes identifier generation processing of generating an identifier (quality determination identifier) that classifies the input image into two classes by learning using a learning image and preprocessing of generating feature information to be input to the quality determination identifier on the basis of the learning image. To implement high-accuracy image classification, both points are important of what kind of feature amount is extracted from the learning image and used, and what kind of quality determination identifier is generated on the basis of the obtained feature amount. The image classification device 100 searches for an optimal combination of a quality determination identifier generation algorithm and a preprocessing algorithm, by the genetic programming.

Furthermore, the image classification device 100 generates an identifier that can perform multi-class quality determination by using the generated image classification program. Note that details of the identifier that can perform multi-class quality determination will be described later.

(About Individual Handled in Genetic Programming)

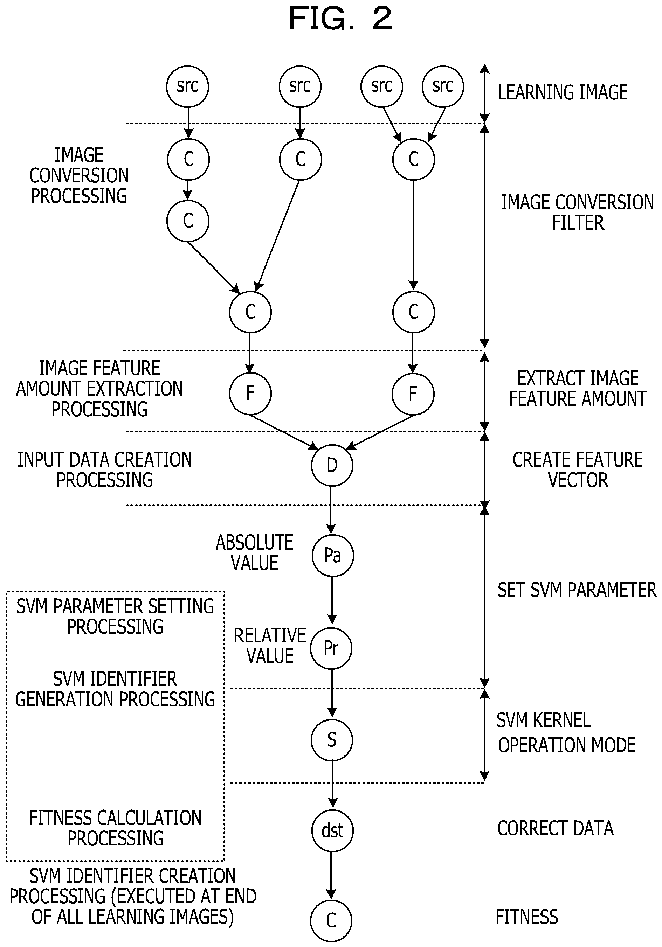

FIG. 2 is a diagram illustrating an example of a basic configuration of a tree structure filter sequence of an individual handled in the genetic programming. As illustrated in FIG. 2, the individual is represented by a tree structure in which a program module is set as an element of each node. In this tree structure, a feature extracted image is generated by adding various image conversion to the input image, and an image feature amount is extracted from the generated image. Then, a feature vector is created by combining the image feature amounts, and learning or determination to determine a class (OK image and NG image) to which the image belongs is performed by the SVM identifier. Note that, the OK image means an image in which a non-defective product is imaged (non-defective product image), and an NG image means an image in which a defective product is imaged (defective product image). Furthermore, the tree structure representing the individual is divided into sections (processing) each including one or more adjacent levels. In the first embodiment, the tree structure is divided into image conversion processing, image feature amount extraction processing, input data creation processing, SVM identifier generation processing, from the leaf side (upper side in FIG. 2) toward the root side (lower side in FIG. 2). Note that, the SVM identifier generation processing includes SVM parameter setting processing, SVM identifier generation processing, and fitness calculation processing.

Here, the image conversion processing, the image feature amount extraction processing, and the input data creation processing are associated with preprocessing of generating data to be input to the identifier. In the image conversion processing, an image conversion filter is used to convert the input image to be suitable for feature extraction. Note that, as the image conversion filter, it is possible to apply a Smooth filter, a Sobel filter, a Laplace filter, an And filter, a Sub filter, an Add filter, an Or filter, an Erode filter, a Dilate filter, a Threshold filter, and the like.

The image feature amount extraction processing is processing of extracting a feature amount from the image converted by the image conversion processing by using a feature extraction filter. As the feature extraction filter, it is possible to apply a filter that calculates an average luminance, a filter that calculates a luminance histogram, a filter that executes fast Fourier transformation (FFT), and the like. Furthermore, it is possible to apply a filter that extracts the same type of features having different control parameters such as the number of divided regions.

The input data creation processing is processing of generating input data (feature vector) to be input to the identifier on the basis of the feature amount extracted by the image feature amount extraction processing. As an input data generation module of generating the input data to be input to the identifier, it is possible to use, for example, a program module each having one or two inputs, and a program module that executes normalization of the input data, compression of the input data, and the like.

The SVM parameter setting processing includes, for example, processing of setting an absolute value of a learning parameter and processing of setting a relative value of the learning parameter. The set absolute value is increased or decreased by addition and subtraction, scaling, or the like using the set relative value, thereby the learning parameter (hereinafter, referred to as hyperparameter) of generating the identifier is determined.

The SVM identifier generation processing determines a kernel function and an operation mode to be used. As the kernel function, it is possible to apply, for example, a LINEAR kernel, a POLYNOMIAL kernel, a Radial Basis Function (RBF) kernel, a SIGMOID kernel, and the like. Furthermore, as the operation mode, a mode of learning the tree structure and the SVM identifier and a mode of determining the quality of the input image are determined.

In the learning performing mode, the fitness calculation processing executes classification processing of determining the quality of the learning image on the basis of the input data created by the input data creation processing in accordance with identifier information generated by the SVM identifier generation processing. Furthermore, the fitness calculation processing compares a classification result by the classification processing with quality indicated by a label attached to the learning image and determines whether the classification result is correct or incorrect. Then, the fitness calculation processing executes determination a plurality of times by using cross-validation or the like to calculate an accuracy rate for the learning image, and calculates a fitness of an individual on the basis of the calculated accuracy rate. Here, the fitness is an index indicating how much an output result of an automatically generated tree structure filter sequence matches a target image recognition result. In the first embodiment, a penalty term is also considered in calculation of the fitness of each individual in the fitness calculation processing. As the penalty term, it is possible to apply the number of feature dimensions of the identifier, the size of the tree structure (the number of nodes or the maximum number of levels of nodes included in the tree structure), the number of support vectors in a case where the SVM identifier is used, and the like. For example, in general, as the identifier becomes more complex in comparison with the obtained data, over-fitting is more likely to occur. Thus, for example, the fitness is calculated while correcting the accuracy rate to be smaller as the number of feature dimensions is larger, or the size of the tree structure is larger, or the number of support vectors is larger. Note that, the number of feature dimensions can be determined on the basis of the input data generation module set in the input data creation processing. By correcting the accuracy rate depending on the penalty term in this way, superiority or inferiority of a learning result can be accurately evaluated, and an image classification program having high classification accuracy with respect to an unknown image can be generated.

(Outline of Image Classification Program Generation Processing)

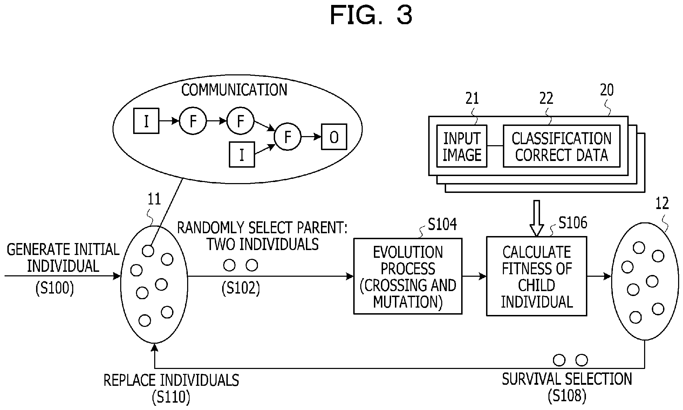

Next, an outline of image classification program generation processing by the genetic programming will be described with reference to FIG. 3.

FIG. 3 is a diagram illustrating an outline of an image classification program generation processing procedure. As a premise, one or more pieces of learning data 20 are prepared before the image classification program generation processing. The learning data 20 includes an input image 21 and a correct classification result of the input image 21 (classification correct data 22 in the present embodiment). The input image 21 is obtained, for example, by imaging a subject by a camera.

In the image classification program generation processing by the genetic programming, an individual (indicated by white circle in FIG. 3) is configured by combining one or more image processing filters as described above. Note that, in the upper left of FIG. 3, "F" indicates an image processing filter incorporated into a node, "I" indicates an input terminal, and "O" indicates an output terminal. Furthermore, a plurality of image processing filters that can be incorporated into the individual is prepared in advance.

The image classification program generation processing by the genetic programming is executed, for example, as follows.

First, in step S100, a plurality of initial individuals included in a population 11 is generated. In a node of each initial individual, an image processing filter that is randomly selected from among the plurality of image processing filters that has been prepared in advance is incorporated. Furthermore, a fitness of each generated initial individual is calculated. Note that, in a case where the maximum value of the calculated fitness is equal to or more than a predetermined threshold, an initial individual having the largest fitness is output as a final image classification program.

In a case where the maximum value of the fitness is less than the predetermined threshold, in step S102, a certain number of (for example, two in FIG. 3) parent individuals are randomly selected from among the population 11. Next, in step S104, evolution process is executed on the certain number (two) of selected parent individuals so that a certain number (two or more) of child individuals are generated. In the evolution process, crossing processing and mutation processing are executed on the two parent individuals. By executing respectively different crossing processing and mutation processing on the two parent individuals, three or more child individuals may be generated. In other words, the number of child individuals to be generated is equal to or more than the number of parent individuals selected from the population 11.

Next, in step S106, a fitness of each generated child individual is calculated.

Here, in a case where the fitness of any one of the generated child individuals is equal to or more than a predetermined threshold, the individual is output as the final image classification program, and the program generation processing is terminated.

On the other hand, in a case where the fitness of all the child individuals is less than the predetermined threshold, in step S108, survival selection is performed from among an individual group 12 including the generated child individuals and the original two parent individuals. In the survival selection, an individual having the largest calculated fitness is selected from among the individual group 12. Furthermore, a single individual is selected from among the remaining individuals in the individual group 12 by a predetermined method. For example, an individual is selected from among the remaining individuals with a probability according to the fitness (roulette selection).

Two individuals selected by such survival selection are replaced with the two individuals selected as the parent individuals among the individuals included in the population 11 in step S110. With this operation, the individual included in the population 11 is changed to a next-generation individual. Then, similar processing is repeated until an individual of which a fitness is equal to or more than the predetermined threshold appears.

As an application of the image classification program generated by the procedure described above, for example, an application of executing image processing on an image obtained by imaging a product and obtaining a desired effect in the factory automation (FA) field is considered. For example, an application is considered that executes image processing on an image obtained by imaging an appearance of a product, extracts a defective part, and extracts a part to be aligned.

In such an application, there is a case where it is necessary to reconstruct the image classification program according to changes and improvements in the product to be a subject, changes in imaging environment according to the changes in the product, or the like. Therefore, it is required for the image classification program to be easily constructed. Furthermore, it is required to construct an image classification program with high robustness against the changes in the imaging environment such as a change in lighting conditions, a shape of a subject, or variations of positional posture.

By using the genetic programming, it is possible to easily generate the image classification program that can be used for such an application by only preparing the input image 21 and the classification correct data 22 corresponding to the input image 21 in advance. Furthermore, by preparing a plurality of pairs of input images 21 and the pieces of classification correct data 22 (learning data 20) in respectively different imaging environments, it is possible to automatically generate an image classification program with high robustness against the change in the imaging environment.

(Outline of Processing)

Next, an outline of processing according to the first embodiment will be described. In the first embodiment, an SVM identifier is generated that can perform multi-class quality determination by using the image classification program that can determine the quality (determination of OK image/NG image) generated by the image classification program generation processing illustrated in FIG. 3. The multi-class quality determination means to determine which one of an OK image class or a plurality of classes in which an NG image is further classified according to defective modes the image belongs to. In the following, the SVM identifier that can perform multi-class quality determination is referred to as a "defective-mode-included quality determination identifier". According to the defective-mode-included quality determination identifier, it is possible to concurrently determine whether a target image, which is one of the OK image (non-defective product) and the NG image (defective product), is a non-defective product or a defective product and which type of defect the defective product has if the target image is the defective product.

(1) Input of Learning Correct Data

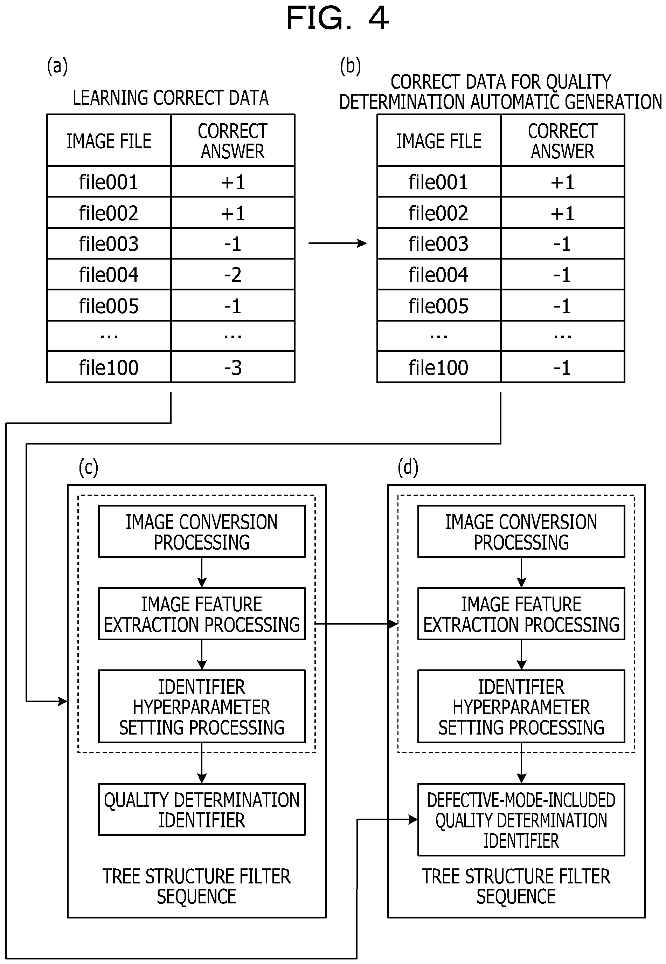

Learning correct data in which a correct class is written for each image file is input. At this time, for example, as illustrated in FIG. 4(a), a positive integer is allocated to the OK image, and a negative integer is allocated to the NG image. Note that a difference in numerical values of the NG images means a difference in defective modes. By inputting the learning correct data as illustrated in FIG. 4(a), the learning correct data can be automatically converted into correct data for quality determination automatic generation (non-defective product is "+1" and defective product is "-1") as illustrated in FIG. 4(b).

(2) Automatic Generation of Quality Determination Program

The image classification program is automatically generated by using the correct data for quality determination automatic generation as described with reference to FIG. 3. Note that, in the following description, the image classification program generated by using the correct data for quality determination automatic generation is referred to as a "quality determination program". As a result of the above automatic generation, a tree structure filter sequence with optimized quality determination accuracy is generated (refer to FIG. 4(c)). In a final stage of the tree structure filter sequence, the quality determination identifier generated from the learning image is combined. This tree structure filter sequence is a result obtained by optimizing the image conversion processing, the image feature amount extraction processing, and an identifier generation hyperparameter in total, and a quality determination program with high generalization is obtained.

(3) Generation of Defective-Mode-Included Quality Determination Identifier

The image conversion processing and the image feature amount extraction processing optimized for the determination of the quality are not necessarily limited to being optimized with accuracy of classifying the types of the NG image. However, it is expected that a very effective image feature amount is extracted. Furthermore, because the hyperparameter of the identifier is also optimized for creating the identifier that identifies two quality classes with the same image feature amount, it can be expected that the hyperparameter is a very effective parameter when a multi-class classifier is created.

According to the prediction, by directly applying multi-class learning correct data including the defective mode (FIG. 4(a)) to an automatic generation result of the quality determination program (in broken line frame in tree structure filter sequence in FIG. 4(c)), a multi-class image classifier (defective-mode-included quality determination identifier) is generated. As a result, the defective-mode-included quality determination identifier (FIG. 4(d)) having the image conversion processing, the image feature amount extraction processing, and the identifier hyperparameter setting in common to the quality determination program can be obtained.

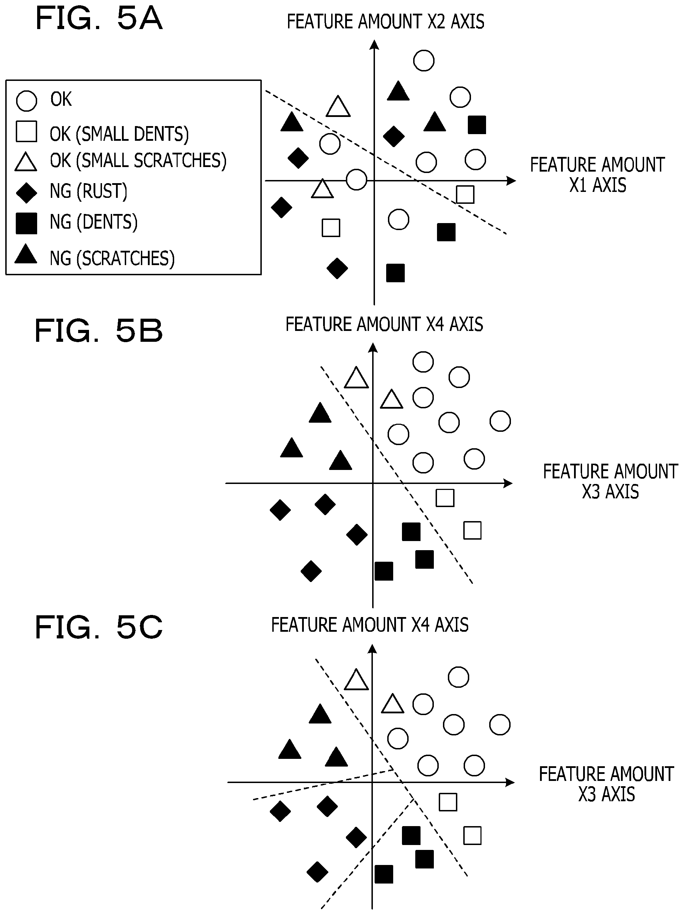

Here, generation processing of the defective-mode-included quality determination identifier will be described in detail with respect to FIGs. 5A to 5C. FIG. 5A schematically illustrates a state where a learning image is arranged in a feature space of an image feature that is set at initial learning. In FIG. 5A, non-defective product data for learning is represented by a white-painted figure, and defective product data is represented by a black-painted figure. It is assumed that there are three types of defects (defective mode) including scratches, dents, and rust. Furthermore, the non-defective product data includes small scratches and small dents included in a normal range.

In the initial learning as illustrated in FIG. 5A, image features X1 and X2 are randomly selected. Therefore, it is not possible to obtain a boundary where the quality of the learning data can be correctly identified. Whereas, when the learning proceeds by the genetic programming and the fitness is sufficiently increased, as illustrated in FIG. 5B, it is possible to correctly determine the quality of all the pieces of learning data. At this time, it is assumed that the image conversion and the image feature amount extraction processing be optimized and X3 and X4 be selected as the image feature amounts. Furthermore, an identification boundary of the quality is correctly obtained by the hyperparameter of the identifier as indicated by a dotted line in FIG. 5B. Note that, in FIG. 5B, it is found that each learning data configures a cluster in the feature space depending on the type of the defect (defective mode).

By applying the learning correct data as illustrated in FIG. 4(a) to the feature amount data in FIG. 5B obtained as described above, the defective-mode-included quality determination identifier is generated that performs classification into four classes including a non-defective product, a defective product (scratch), a defective product (dent), and a defective product (rust). As a result, a classification boundary as indicated by a broken line in FIG. 5C can be obtained.

(4) Defective Mode Classification Processing

At the time of performing the image classification, the quality determination program is applied to the input image to extract the image feature amount, and the feature amount is given to the defective-mode-included quality determination identifier to perform multi-class classification (defect classification). Note that the quality may be determined in parallel by using the quality determination program and the quality determination identifier thereof.

(About Processing Functions of Image Classification Device 100)

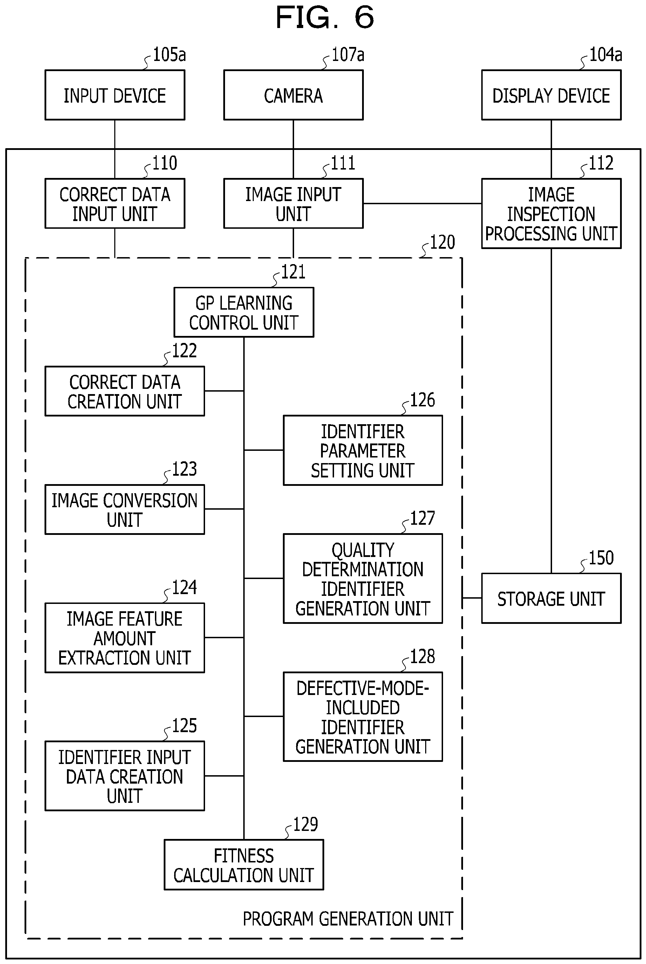

FIG. 6 is a block diagram illustrating a configuration example of processing functions of the image classification device 100. The image classification device 100 includes an image input unit 111, a correct data input unit 110, an image inspection processing unit 112 as a classification unit, a program generation unit 120, and a storage unit 150.

Processing of the image input unit 111, the correct data input unit 110, the image inspection processing unit 112, and the program generation unit 120 is implemented, for example, by execution of a predetermined program (including information processing program) by the processor 101 of the image classification device 100. The storage unit 150 is implemented as, for example, a storage area of the RAM 102 of the image classification device 100.

The image input unit 111 acquires data of an image captured by the camera 107a and outputs the data to the program generation unit 120 or the image inspection processing unit 112. The program generation unit 120 generates the image classification program for quality determination (quality determination program) by the genetic programming and saves data corresponding to the generated quality determination program (data of best individual) in the storage unit 150. Furthermore, the program generation unit 120 generates the defective-mode-included quality determination identifier by using the quality determination program and saves the generated identifier in the storage unit 150. Note that an internal configuration of the program generation unit 120 will be described later.

The correct data input unit 110 acquires learning correct data in a case where an input of data (learning correct data in FIG. 4(a)) in which a label (+1, -1, -2, or the like) is attached to the learning image acquired from the camera 107a by the image input unit 111 is received, for example, from the input device 105a. Then, the correct data input unit 110 outputs the acquired learning correct data to the program generation unit 120.

The image inspection processing unit 112 acquires the data of the image captured by the camera 107a via the image input unit 111. Furthermore, the image inspection processing unit 112 reads the data of the quality determination program (data of best individual) and the defective-mode-included quality determination identifier stored in the storage unit 150 and performs multi-class classification (defect classification) on the acquired image. The image inspection processing unit 112 displays a determination result on, for example, the display device 104a.

The storage unit 150 stores the data of the quality determination program (data of best individual) generated by the program generation unit 120 and the defective-mode-included quality determination identifier. As the learning image, the image can be used that is acquired by the image input unit 111 from the camera 107a.

Here, details of the program generation unit 120 will be further described. The program generation unit 120 includes a Genetic Programming (GP) learning control unit 121, a correct data creation unit 122 as a creation unit, an image conversion unit 123, an image feature amount extraction unit 124, an identifier input data creation unit 125, an identifier parameter setting unit 126, a quality determination identifier generation unit 127, a fitness calculation unit 129, a defective-mode-included identifier generation unit 128 as a second generation unit.

The GP learning control unit 121 controls execution of entire program generation processing by the genetic programming. For example, the GP learning control unit 121 executes processing such as generation of an initial individual or evolution process for the individual.

The correct data creation unit 122 creates correct data for quality determination automatic generation that is classified into the OK image (+1) and the NG image (-1) as illustrated in FIG. 4(b) from the learning correct data including the difference in the defective modes as illustrated in FIG. 4 (a). In this case, the correct data creation unit 122 converts a negative integer of the values in FIG. 4(a) into "-1". The learning correct data in FIG. 4(b) is used for program generation processing by the genetic programming by the GP learning control unit 121 or the like.

The image conversion unit 123 executes image conversion processing on the input image in accordance with an image conversion filter set in the node of the image conversion processing in the tree structure of the individual.

The image feature amount extraction unit 124 executes feature amount extraction processing from the input image after the image conversion in accordance with a feature extraction filter set in the node of the image feature amount extraction processing in the tree structure of the individual.

The identifier input data creation unit 125 generates input data to be input to the identifier on the basis of the feature amount of the image in accordance with a program module set in the node of the input data creation processing in the tree structure of the individual.

The identifier parameter setting unit 126 executes processing of setting the learning parameter (hyperparameter) of the identifier in accordance with an absolute value and a relative value set in the node of the SVM parameter setting processing in the tree structure of the individual.

The quality determination identifier generation unit 127 executes processing of generating the quality determination identifier by learning using the learning parameter set by the identifier parameter setting unit 126 in accordance with a kernel function and an operation mode set in the node of the SVM identifier generation processing in the tree structure of the individual.

The fitness calculation unit 129 determines correct or wrong according to whether or not the result of determining the class of the learning image by using each individual coincides with the label attached to the learning image and calculates a fitness of each individual on the basis of the accuracy rate.

The defective-mode-included identifier generation unit 128 generates the defective-mode-included quality determination identifier by directly applying the learning correct data illustrated in FIG. 4(a) to each processing, in the broken line frame illustrated in FIG. 4(c), of the tree structure filter sequence generated by the GP learning control unit 121 or the like.


(Regarding Processing of Program Generation unit 120)


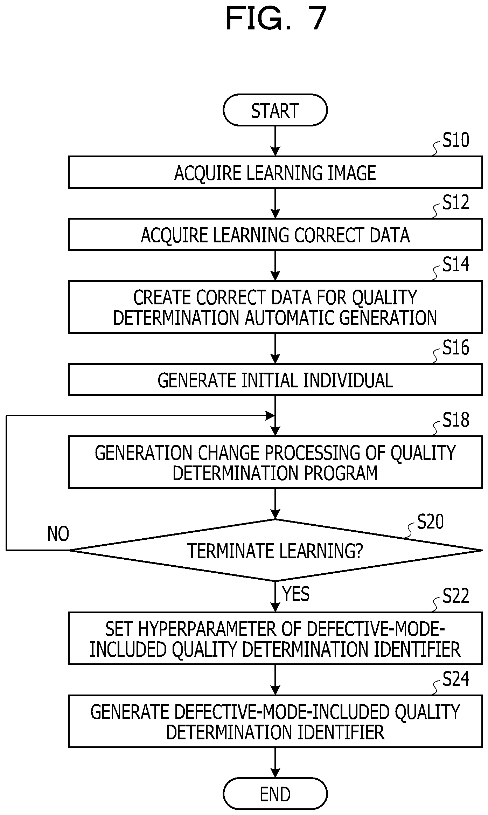

Next, processing of the program generation unit 120 will be described with reference to the flowchart in FIG. 7.

As a premise of the processing in FIG. 7, it is assumed that the learning image captured by the camera 107a be input to the image input unit 111. Furthermore, it is assumed that the learning correct data (FIG. 4(a)) input from the input device 105a to the correct data input unit 110 be stored in the storage unit 150.

In FIG. 7, first, in step S10, the GP learning control unit 121 acquires a learning image from the image input unit 111.

Next, in step S12, the correct data creation unit 122 acquires the learning correct data (FIG. 4(a)) from the storage unit 150.

Next, in step S14, the correct data creation unit 122 creates correct data for quality determination automatic generation (FIG. 4(b)) from the acquired learning correct data (FIG. 4(a)).

Next, in step S16, the GP learning control unit 121 generates a plurality of initial individuals and stores information indicating the generated initial individuals in the storage unit 150. Hereinafter, the individuals stored in the storage unit 150 are referred to as an "individual group".

As a procedure of generating an initial individual, basically, a node is set for processing in each level of the tree structure of the individual, and an element of each node is selected and set from program modules corresponding to the processing to which the node belongs.

Next, in step S18, under the control of the GP learning control unit 121, the image conversion unit 123, the image feature amount extraction unit 124, the identifier input data creation unit 125, the identifier parameter setting unit 126, the quality determination identifier generation unit 127, and the fitness calculation unit 129 execute generation change processing of the quality determination program. In this step S18, the processing in steps S102, S104, S106, S108, and S110 described with reference to FIG. 3 is executed.

Next, in step S20, the GP learning control unit 121 determines whether or not to terminate the learning. In this step S20, in a case where a fitness of any one of the child individuals generated in the processing in step S18 is equal to or more than a predetermined threshold, it is determined to terminate learning. When the determination in step S20 is negative, the processing in step S18 is repeatedly executed, and in a case where the determination in step S20 is positive, the procedure proceeds to step S22.

When the procedure proceeds to step S22, the defective-mode-included identifier generation unit 128 sets a hyperparameter of the defective-mode-included quality determination identifier. In this case, the hyperparameter of the quality determination identifier that has been set when the quality determination program is generated is set as it is.

Next, in step S24, the defective-mode-included identifier generation unit 128 directly applies the learning correct data (FIG. 4(a)) to the quality determination program generated by repeating step S18 so as to generate the defective-mode-included quality determination identifier.

As described above, all the processing in FIG. 7 is terminated. In the first embodiment, by executing the processing in FIG. 7, it is possible to generate the defective-mode-included quality determination identifier while adding nearly no processing with respect to the automatic generation processing of the quality determination program.

(Embodiments)

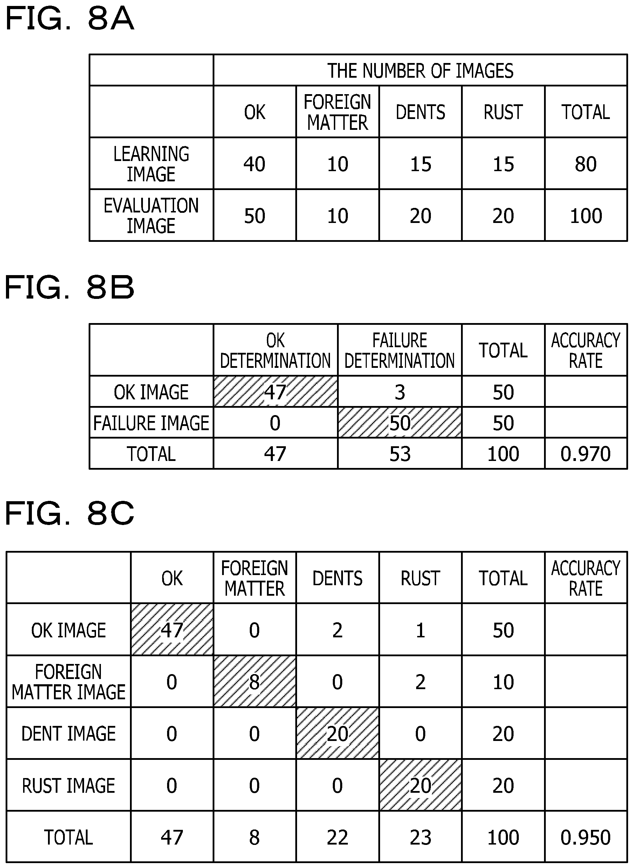

FIGs. 8A to 8C illustrate verification experiment results of the defective-mode-included quality determination identifier generated along the flowchart in FIG. 7. In this verification experiment, as illustrated in FIG. 8A, in addition to the OK image, three types of the defective modes of the NG image: foreign matters, dents, and rust were set. A total of 80 learning images and a total of 100 evaluation images were prepared. Note that breakdown of the number of each image is as illustrated in FIG. 8A.

An outline of a result of the automatic generation of the quality determination program by using the learning images illustrated in FIG. 8A is illustrated in FIG. 8B. In this example, as a result of optimizing the image conversion and the image feature amount extraction processing, a 40-dimensional image feature amount was selected. Furthermore, as the hyperparameter of the identifier, optimum parameter values of Cost = 18.0 and $\gamma$ = 3.0 were obtained in the cubic polynomial kernel. As a result of performing quality determination on the 100 evaluation images by using the quality determination program, a part indicated by hatching in FIG. 8B was a correct answer, and quality determination accuracy of an accuracy rate 97% (wrong determination for three images) was able to be obtained.

Furthermore, by giving a total of four classes of learning correct data including the OK image and the NG images (foreign matter, dents, and rust) by using the automatically generated quality determination program, the defective-mode-included quality determination identifier was generated. Then, when the multi-class classification was performed on the 100 evaluation images, parts indicated by hatching in FIG. 8C were correct answers.

From FIG. 8C, it is found that a total classification accuracy rate of the OK image and the three types of defective modes is 95% (= 95/100 $\times$ 100) and that the images can be classified into four classes with sufficiently high accuracy. Furthermore, regarding the classification accuracy of which the target is narrowed to the three defective modes of the NG images, the images were correctly classified except for two images of which the defective mode of the foreign matter was misclassified into the rust. The accuracy rate is 96% (48/50 $\times$ 100), and it was possible to obtain a result of sufficiently high classification accuracy as limiting the target to the NG images.

Note that, three OK images that have been exceedingly detected in the evaluation of the quality determination are continuously misclassified (OK image is determined as dent or rust) in the defective mode included quality determination. It is estimated this is because the image conversion processing and the image feature amount extraction processing of the quality determination program are used in common.

As can be found from the above description, in the present embodiment, a function as a first generation unit is implemented that includes the GP learning control unit 121, the image conversion unit 123, the image feature amount extraction unit 124, the identifier input data creation unit 125, the identifier parameter setting unit 126, the quality determination identifier generation unit 127, and the fitness calculation unit 129 and automatically generates the quality determination program based on the correct data for quality determination automatic generation on the basis of the genetic programming.

As described in detail above, according to the present embodiment, the program generation unit 120 automatically generates the image classification program (quality determination program) of classifying the learning images that have been classified into two classes in advance into two classes on the basis of the genetic programming. Then, the program generation unit 120 (defective-mode-included identifier generation unit 128) gives the learning images that have been classified into three or more classes in advance to the automatically generated quality determination program and generates the defective-mode-included quality determination identifier that classifies the learning images into three or more classes. As a result, the defective-mode-included quality determination identifier can be generated while adding nearly no processing to the automatic generation processing of the quality determination program. Therefore, it is possible to reduce a processing amount and shorten a processing time than a case where the defective-mode-included identifier generation unit is automatically generated by learning.

Furthermore, in the first embodiment, because the automatically generated quality determination program is used, it is possible to generate the defective-mode-included quality determination identifier while maintaining the quality determination accuracy.

Furthermore, in the first embodiment, the image classification device 100 includes the image inspection processing unit 112 that determines the quality of the inspection image by using the defective-mode-included quality determination identifier generated by the program generation unit 120. As a result, by inputting the inspection image to the image classification device 100, it is possible to accurately classify the inspection image into multiple classes and recognize the defective mode.

Furthermore, in the first embodiment, the correct data creation unit 122 generates the correct data (FIG. 4(b)) for quality determination automatic generation on the basis of the learning correct data (FIG. 4(a)). As a result, only by creating the learning correct data used to generate the defective-mode-included quality determination identifier in advance, the quality determination program can be automatically generated.

Note that, in the above first embodiment, in the processing in FIG. 7, a case has been described where the defective-mode-included quality determination identifier is generated by using the quality determination program that has been generated in the previous processing in a case where the determination in step S20 is positive. However, the present invention is not limited to this. For example, while the processing in step S18 is repeated, the defective-mode-included quality determination identifier in that generation may be generated by using the best individual each time the fitness of the best individual increases.

Note that, in the above first embodiment, a case where the NG images are classified into the plurality of classes has been described. However, the present invention is not limited to this. In other words, instead of or together with that the NG images are classified into the plurality of classes, the OK images may be classified into a plurality of classes. In a case where the OK images are classified into the plurality of classes, as illustrated in FIGs. 5A to 5C, it is possible to classify the OK images into a complete non-defective product, small scratches, and small dents, for example.

[Second Embodiment]

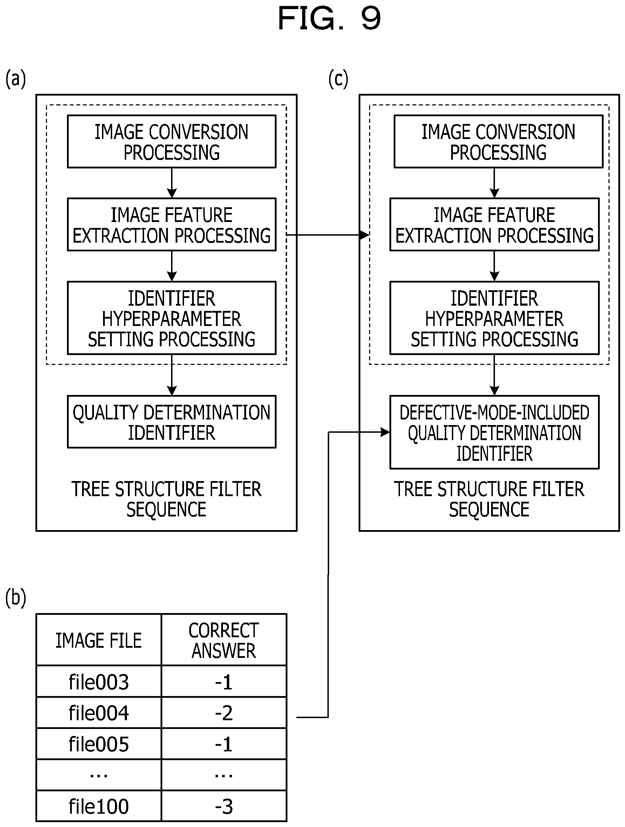

Next, a second embodiment will be described with reference to FIGs. 9(a) to 9(c). FIGs. 9(a) to 9(c) schematically illustrate processing according to the second embodiment.

In the second embodiment, after a quality determination program as illustrated in FIG. 9(a) is generated as in the first embodiment (FIG. 4(c)), a multi-class identifier is generated. When this multi-class identifier is generated, by applying learning correct data (refer to FIG. 9(b)) including only classification target images including NG images other than OK images to processing in a broken line frame in a tree structure filter sequence of a quality determination program in FIG. 9(a), a defective mode limited identifier is generated. Note that it is sufficient that the learning correct data including only the NG images be obtained by extracting data other than data of "+1" from the learning correct data illustrated in FIG. 4(a).

By using only the learning correct data of the NG image as a learning target in this way, it is possible to improve determination accuracy of a defective mode depending on features of the image.

In this case, when the image inspection processing unit 112 actually classifies the images, the image inspection processing unit 112 determines the quality indicating whether the image is an OK image or an NG image by using the quality determination identifier illustrated in FIG. 9(a) at a first stage. Then, it is sufficient that the image inspection processing unit 112 further classify the NG image by using the defective mode limited identifier illustrated in FIG. 9(b) at a second stage.

[Third Embodiment]

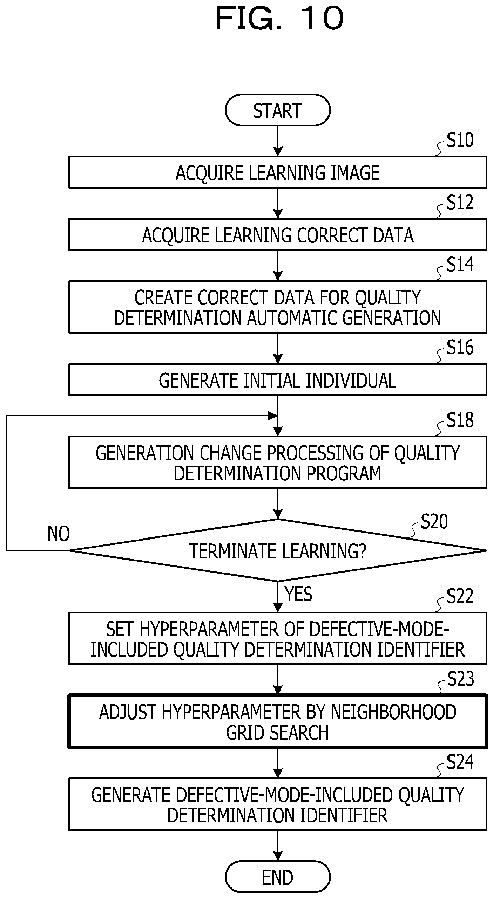

Next, a third embodiment will be described with reference to FIG. 10.

FIG. 10 is a flowchart illustrating processing of a program generation unit 120 according to the third embodiment. In the third embodiment, step S23 is executed between steps S22 and S24 in the first embodiment (FIG. 6).

After setting a hyperparameter of a defective-mode-included quality determination identifier as in the first embodiment in step S22, a defective-mode-included identifier generation unit 128 adjusts the hyperparameter by neighborhood grid search in step S23. Specifically, the defective-mode-included identifier generation unit 128 performs multi-class classification cross-validation on a learning image while performing grid search near the hyperparameter set in step S22 and searches for a parameter that increases an accuracy rate. Then, after setting the hyperparameter obtained as a result of search, the defective-mode-included identifier generation unit 128 generates a final defective-mode-included quality determination identifier in step S24.

In this way, when the defective-mode-included quality determination identifier is generated, it is possible to obtain a multi-class classification boundary with higher generalization by further adjusting the hyperparameter optimized for two-class classification (quality determination).

[Fourth Embodiment]

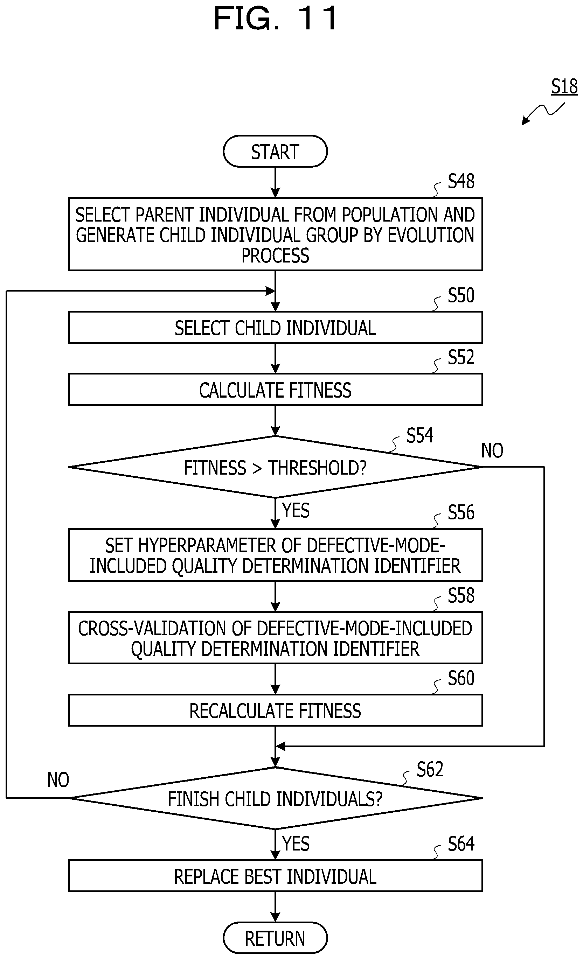

Next, a fourth embodiment will be described with reference to FIG. 11.

FIG. 11 is a flowchart illustrating generation change processing of a quality determination program (S18 in FIG. 6: processing corresponding to steps S102, S104, S106, S108, and S110 in FIG. 3) according to the fourth embodiment. In the fourth embodiment, by reflecting determination accuracy of multi-class classification (quality determination including defective mode) to a fitness in an automatic generation process of the quality determination program, learning is progressed while obtaining both of accuracy of the quality determination and accuracy of the multi-class classification.

Hereinafter, processing in FIG. 11 will be described in detail.

In the processing in FIG. 11, first, in step S48, a GP learning control unit 121 executes evolution process processing on a parent individual randomly selected from a population and generates a child individual group by the evolution process.

Next, in step S50, the GP learning control unit 121 selects one child individual from the generated child individual group. Next, in step S52, a fitness calculation unit 129 calculates a fitness of the child individual. Next, in step S54, the GP learning control unit 121 determines whether or not the fitness is larger than a predetermined threshold. In a case where the determination in step S54 is negative, the procedure proceeds to step S62. However, in a case where the determination in step S54 is positive, the procedure proceeds to step S56.

When the procedure proceeds to step S56, the GP learning control unit 121 directly sets a hyperparameter of the selected child individual as a hyperparameter of a defective-mode-included quality determination identifier as in step S22.

Next, in step S58, the GP learning control unit 121 performs cross-validation of the defective-mode-included quality determination identifier. Then, in step S60, the GP learning control unit 121 recalculates (correct) the fitness on the basis of an accuracy rate of a learning image obtained by the cross-validation of the defective-mode-included quality determination identifier. Various methods can be considered as a recalculation method of the fitness. For example, the following method can be adopted.

(Recalculation Method (1))

As indicated in the following formula (1), an average of an accuracy rate a of the cross-validation of the quality determination and an accuracy rate b of the cross-validation of the defective-mode-included quality determination identifier is used as a fitness.

$$\mathtt{Fitness\ =\ (a\ +\ b)/2\ \ldots\ (1)}$$

(Recalculation Method (2))

Generalization is performed as in the following formula (2) by using a weighting coefficient k ($0 \leq k \leq 1$), and a balance between the accuracy rates a and b is adjusted.

$$\mathtt{Fitness\ =\ k\ \times\ a\ +\ (1\ -\ k)\ \times\ b\ \ldots\ (2)}$$

(Recalculation Method (3))

In addition to the accuracy rate, a penalty term that enhancing generalization is added, and the fitness is calculated as in the following formula (3).

$$\mathtt{Fitness\ =\ k\ \times\ a\ +\ (1\ -\ k)\ \times\ b\ -\ generalization\ penalty}$$
$$\mathtt{term\ \ldots\ (3)}$$

Next, when the procedure proceeds to step S62, whether or not to finish the child individuals, that is, whether or not all the child individuals generated in step S48 have been selected is determined. If the determination in step S62 is negative, the processing returns to step S50. After returning to step S50, the processing and the determination in steps S50 to S62 are repeated, and when the determination in step S62 is positive, the procedure proceeds to step S64. When the procedure proceeds to step S64, the GP learning control unit 121 selects the best individual on the basis of the fitness of each individual obtained so far (survival selection) and replaces the selected individual with the individual included in the population. Thereafter, the procedure proceeds to step S20 in FIG. 6.

As described above, according to the fourth embodiment, by considering the determination accuracy of the defective-mode-included quality determination identifier in the automatic generation process of the quality determination program, it is possible to improve accuracy of defective mode included quality determination.

Furthermore, in the fourth embodiment, only when the fitness obtained by automatically generating the quality determination program exceeds a predetermined threshold, the cross-validation of the defective-mode-included quality determination identifier is performed. This prevents an increase in a processing amount.

(Modification)

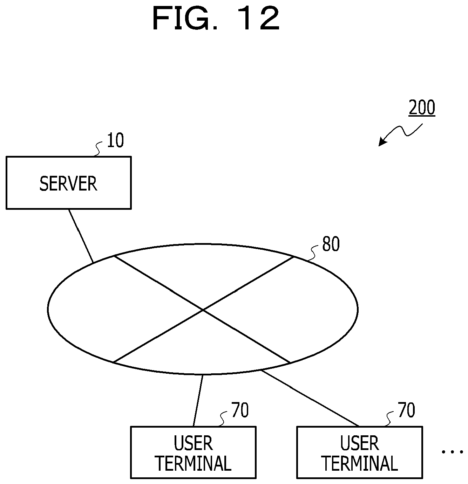

Note that, in above each embodiment, in addition to the determination of the quality of the image, the image inspection of classifying the type of the defect in a case of the NG image may be provided as a service. FIG. 12 schematically illustrates a configuration of an image classification system 200 in a case where image inspection is provided as a service.

The image classification system 200 in FIG. 12 includes a server 10 and a user terminal 70. The server 10 and the user terminal 70 are connected to a network 80 such as the Internet.

A user creates a learning image and learning correct data at the time of learning by the user terminal 70 and transmits the created image and data to the server 10. As in the first embodiment, the server 10 automatically generates a quality determination program by using the learning image and the learning correct data and generates a defective-mode-included quality determination identifier by using the automatic generation result.

At the time of image inspection, the user terminal 70 transmits an inspection image to the server 10. The server 10 extracts an image feature amount from the inspection image and determines whether the image is an OK image or an NG image by inputting the feature amount to the defective-mode-included quality determination identifier and determines the type of the defect if the image is an NG image. Then, the server 10 transmits the determination result to the user terminal 70. In other words, the server 10 has a function similar to at least the program generation unit 120 and the image inspection processing unit 112 in FIG. 6.

Note that, in the above description, an example in which the server 10 executes the processing corresponding to the first embodiment has been described. However, the present invention is not limited to this, and the server 10 may execute processing corresponding to the second to fourth embodiments.

Furthermore, by transmitting the quality determination program and the defective-mode-included quality determination identifier generated by the server 10 to the user terminal 70, the user terminal 70 may determine the inspection image.

Note that the above processing functions can be implemented by a computer. In that case, a program is provided in which processing content of a function that a processing apparatus should have is written. The program is executed on the computer, whereby the above processing function is implemented on the computer. The program in which the processing content is written can be recorded in a computer-readable reading medium (except for carrier wave).

In a case of distributing the program, for example, the program is sold in a form of a portable recording medium such as a digital versatile disc (DVD) or a compact disc read only memory (CD-ROM) in which the program is recorded. Furthermore, it is possible to store the program in a storage device of a server computer and transfer the program from the server computer to another computer through a network.

The computer which executes the program stores, for example, the program recorded in the portable recording medium or the program transferred from the server computer in a storage device of the computer. Then, the computer reads the program from the storage device of the computer and executes processing according to the program. Note that, the computer can also read the program directly from the portable recording medium and execute processing according to the program. Furthermore, the computer also can sequentially execute processing according to the received program each time the program is transferred from the server computer.

The embodiments described above are preferred examples. However, the present embodiment is not limited to this, and a variety of modifications can be made without departing from the scope of the present embodiment.

REFERENCE SIGNS LIST

    100 image classification device (information processing device)

112 image inspection processing unit (classification unit)
121 GP learning control unit (part of first generation unit)
122 correct data creation unit (creation unit)
123 image conversion unit (part of first generation unit)
124 image feature amount extraction unit (part of first generation unit)
125 identifier input data creation unit (part of first generation unit)
126 identifier parameter setting unit (part of first generation unit)
127 quality determination identifier generation unit (part of first generation unit)
128 defective-mode-included identifier generation unit (second generation unit)
129 fitness calculation unit (part of first generation unit)

**Claims**

1. An information processing device that automatically generates an image classification program in which element filters are combined on a basis of genetic programming, the information processing device comprising:

   a first generation unit configured to automatically generate an image classification program that classifies a first learning image group classified into two classes in advance into the two classes on a basis of the genetic programming; and
   a second generation unit configured to generate a multi-class image classifier that gives a second learning image group classified into three or more classes in advance to the image classification program automatically generated by the first generation unit and classifies the second learning image group into the three or more classes.

2. The information processing device according to claim 1, further comprising:
   a classification unit configured to classify images into the three or more classes by using the multi-class image classifier generated by the second generation unit.

3. The information processing device according to claim 1 or 2, further comprising:
   a creation unit configured to set an image included in the first learning image group to be the same as an image included in the second learning image group and create the first learning image group by reclassifying the second learning image group, classified into the three or more classes in advance, into two classes.

4. The information processing device according to any one of claims 1 to 3, wherein

   the first generation unit automatically generates an image classification program that classifies images into a non-defective product image and a defective product image, and
   the second generation unit generates a multi-class image classifier that classifies at least one of the non-defective product image and the defective product image into a plurality of subdivided classes.

5. The information processing device according to claim 4, wherein
   the second generation unit generates a multi-class image classifier that classifies the defective product images into a plurality of classes for each defect content.

6. The information processing device according to any one of claims 1 to 5, wherein
   the second generation unit generates the multi-class image classifier by using a tree structure filter sequence, included in the image classification program generated by the first generation unit, that executes image conversion processing, image feature amount extraction processing, and identifier creation hyperparameter setting processing.

7. The information processing device according to claim 2, wherein

   the first generation unit automatically generates an image classification program that classifies images into a non-defective product image and a defective product image,
   the second generation unit assumes classification target images which are one of the non-defective product image and the defective product image included in the first learning image group as the second learning image group and generates a multi-class image classifier that classifies the second learning image group into a plurality of subdivided classes, and

the classification unit classifies the image, classified into the classification target image by using the image classification program, by using the multi-class image classifier.

8. The information processing device according to claim 6, wherein
the second generation unit specifies a hyperparameter for identifier creation suitable for classification into the three or more classes and generates the multi-class image classifier by using the specified hyperparameter for identifier creation while changing the hyperparameter for identifier creation within a predetermined width with reference to the hyperparameter for identifier creation set in the image classification program generated by the first generation unit.

9. The information processing device according to any one of claims 1 to 8, wherein
in a case where a fitness calculated by using the first learning image group when the image classification program is automatically generated is more than a predetermined value, the first generation unit corrects the fitness on a basis of determination accuracy of a multi-class image classifier generated by using an image classification program corresponding to the fitness.

10. An information processing method that automatically generates an image classification program in which element filters are combined on a basis of genetic programming, the information processing method of causing a computer to execute processing comprising:

automatically generating an image classification program that classifies a first learning image group classified into two classes in advance into the two classes on a basis of the genetic programming; and
generating a multi-class image classifier that gives a second learning image group classified into three or more classes in advance to the automatically generated image classification program and classifies the second learning image group into the three or more classes.

11. The information processing method according to claim 10, wherein
the computer further executes processing of classifying images into the three or more classes by using the generated multi-class image classifier.

12. The information processing method according to claim 10 or 11, wherein
the computer further executes processing of setting an image included in the first learning image group to be the same as an image included in the second learning image group and creating the first learning image group by reclassifying the second learning image group, classified into the three or more classes in advance, into two classes.

13. The information processing method according to any one of claims 10 to 12, wherein

in the processing of automatically generating the image classification program, an image classification program is automatically generated that classifies images into a non-defective product image and a defective product image, and
in the processing of generating the multi-class image classifier, a multi-class image classifier is generated that classifies at least one of the non-defective product image and the defective product image into a plurality of subdivided classes.

14. The information processing method according to claim 13, wherein
in the processing of generating the multi-class image classifier, a multi-class image classifier that classifies the defective product images into a plurality of classes for each defect content is generated.

15. The information processing method according to any one of claims 10 to 14, wherein
in the processing of generating the multi-class image classifier, the multi-class image classifier is generated by using a tree structure filter sequence, included in the automatically generated image classification program, that executes image conversion processing, image feature amount extraction processing, and identifier creation hyperparameter setting processing.

16. The information processing method according to claim 11, wherein

in the processing of automatically generating the image classification program, an image classification program that classifies images into a non-defective product image and a defective product image is automatically generated,

in the processing of generating the multi-class image classifier, a multi-class image classifier is generated that assumes classification target images which are one of the non-defective product image and the defective product image included in the first learning image group as the second learning image group and classifies the second learning image group into a plurality of subdivided classes, and

in the classifying processing, the image, classified into the classification target image by using the image classification program, is classified by using the multi-class image classifier.

17. The information processing method according to claim 15, wherein
in the processing of generating the multi-class image classifier, a hyperparameter for identifier creation suitable for classification into the three or more classes is specified and the multi-class image classifier is generated by using the specified hyperparameter for identifier creation while changing the hyperparameter for identifier creation within a predetermined width with reference to the hyperparameter for identifier creation set in the automatically generated image classification program.

18. The information processing method according to any one of claims 10 to 17, wherein
in the processing of automatically generating the image classification program, in a case where a fitness calculated by using the first learning image group when the image classification program is automatically generated is more than a predetermined value, the fitness is corrected on a basis of determination accuracy of a multi-class image classifier generated by using an image classification program corresponding to the fitness.

19. An information processing program that automatically generates an image classification program in which element filters are combined on a basis of genetic programming, the information processing program for causing a computer to execute processing comprising:

automatically generating an image classification program that classifies a first learning image group classified into two classes in advance into the two classes on a basis of the genetic programming; and
generating a multi-class image classifier that gives a second learning image group classified into three or more classes in advance to the automatically generated image classification program and classifies the second learning image group into the three or more classes.

## FIG. 1

FIG. 2

# FIG. 3

COMMUNICATION

I → F → F → F → O
I

21 22 20

INPUT IMAGE | CLASSIFICATION CORRECT DATA

11

GENERATE INITIAL INDIVIDUAL (S100)

RANDOMLY SELECT PARENT: TWO INDIVIDUALS (S102)

S104
EVOLUTION PROCESS (CROSSING AND MUTATION)

S106
CALCULATE FITNESS OF CHILD INDIVIDUAL

12

REPLACE INDIVIDUALS (S110)

SURVIVAL SELECTION (S108)

# FIG. 4

(a)
LEARNING CORRECT DATA

| IMAGE FILE | CORRECT ANSWER |
|---|---|
| file001 | +1 |
| file002 | +1 |
| file003 | -1 |
| file004 | -2 |
| file005 | -1 |
| ... | ... |
| file100 | -3 |

(b)
CORRECT DATA FOR QUALITY DETERMINATION AUTOMATIC GENERATION

| IMAGE FILE | CORRECT ANSWER |
|---|---|
| file001 | +1 |
| file002 | +1 |
| file003 | -1 |
| file004 | -1 |
| file005 | -1 |
| ... | ... |
| file100 | -1 |

(c)

IMAGE CONVERSION PROCESSING

↓

IMAGE FEATURE EXTRACTION PROCESSING

↓

IDENTIFIER HYPERPARAMETER SETTING PROCESSING

↓

QUALITY DETERMINATION IDENTIFIER

TREE STRUCTURE FILTER SEQUENCE

(d)

IMAGE CONVERSION PROCESSING

↓

IMAGE FEATURE EXTRACTION PROCESSING

↓

IDENTIFIER HYPERPARAMETER SETTING PROCESSING

↓

DEFECTIVE-MODE-INCLUDED QUALITY DETERMINATION IDENTIFIER

TREE STRUCTURE FILTER SEQUENCE

FIG. 5A

FEATURE AMOUNT X2 AXIS

○ OK

□ OK (SMALL DENTS)

△ OK (SMALL SCRATCHES)

◆ NG (RUST)

■ NG (DENTS)

▲ NG (SCRATCHES)

FEATURE AMOUNT X1 AXIS

FIG. 5B

FEATURE AMOUNT X4 AXIS

FEATURE AMOUNT X3 AXIS

FIG. 5C

FEATURE AMOUNT X4 AXIS

FEATURE AMOUNT X3 AXIS

# FIG. 6

# FIG. 7

```
            ┌─────────────┐
            │    START    │
            └─────────────┘
                   │
                   ▼                              ⌐S10
    ┌──────────────────────────────────────────┐
    │        ACQUIRE LEARNING IMAGE            │
    └──────────────────────────────────────────┘
                   │
                   ▼                              ⌐S12
    ┌──────────────────────────────────────────┐
    │      ACQUIRE LEARNING CORRECT DATA       │
    └──────────────────────────────────────────┘
                   │
                   ▼                              ⌐S14
    ┌──────────────────────────────────────────┐
    │       CREATE CORRECT DATA FOR QUALITY    │
    │   DETERMINATION AUTOMATIC GENERATION     │
    └──────────────────────────────────────────┘
                   │
                   ▼                              ⌐S16
    ┌──────────────────────────────────────────┐
    │        GENERATE INITIAL INDIVIDUAL       │
    └──────────────────────────────────────────┘
                   │
                   ▼                              ⌐S18
    ┌──────────────────────────────────────────┐
    │   GENERATION CHANGE PROCESSING OF QUALITY│
    │        DETERMINATION PROGRAM             │
    └──────────────────────────────────────────┘
                   │
                   ▼                              ⌐S20
    NO    ◇─────────────────────────────────────◇
    ◄─────    TERMINATE LEARNING?
          ◇─────────────────────────────────────◇
                   │ YES
                   ▼                              ⌐S22
    ┌──────────────────────────────────────────┐
    │   SET HYPERPARAMETER OF DEFECTIVE-MODE-   │
    │ INCLUDED QUALITY DETERMINATION IDENTIFIER │
    └──────────────────────────────────────────┘
                   │
                   ▼                              ⌐S24
    ┌──────────────────────────────────────────┐
    │ GENERATE DEFECTIVE-MODE-INCLUDED QUALITY  │
    │      DETERMINATION IDENTIFIER            │
    └──────────────────────────────────────────┘
                   │
                   ▼
            ┌─────────────┐
            │     END     │
            └─────────────┘
```

# FIG. 8A

| | THE NUMBER OF IMAGES | | | | |
|---|---|---|---|---|---|
| | OK | FOREIGN MATTER | DENTS | RUST | TOTAL |
| LEARNING IMAGE | 40 | 10 | 15 | 15 | 80 |
| EVALUATION IMAGE | 50 | 10 | 20 | 20 | 100 |

# FIG. 8B

| | OK DETERMINATION | FAILURE DETERMINATION | TOTAL | ACCURACY RATE |
|---|---|---|---|---|
| OK IMAGE | 47 | 3 | 50 | |
| FAILURE IMAGE | 0 | 50 | 50 | |
| TOTAL | 47 | 53 | 100 | 0.970 |

# FIG. 8C

| | OK | FOREIGN MATTER | DENTS | RUST | TOTAL | ACCURACY RATE |
|---|---|---|---|---|---|---|
| OK IMAGE | 47 | 0 | 2 | 1 | 50 | |
| FOREIGN MATTER IMAGE | 0 | 8 | 0 | 2 | 10 | |
| DENT IMAGE | 0 | 0 | 20 | 0 | 20 | |
| RUST IMAGE | 0 | 0 | 0 | 20 | 20 | |
| TOTAL | 47 | 8 | 22 | 23 | 100 | 0.950 |

# FIG. 9

(a)

```
┌─────────────────────────────────────────┐
│  ┌ ─ ─ ─ ─ ─ ─ ─ ─ ─ ─ ─ ─ ─ ─ ─ ─ ─ ┐  │
│  │  ┌─────────────────────────────┐  │  │
│  │  │      IMAGE CONVERSION       │  │  │
│  │  │         PROCESSING          │  │  │
│  │  └─────────────────────────────┘  │  │
│  │                │                  │  │
│  │                ▼                  │  │
│  │  ┌─────────────────────────────┐  │  │
│  │  │       IMAGE FEATURE         │  │  │
│  │  │   EXTRACTION PROCESSING     │  │  │
│  │  └─────────────────────────────┘  │  │
│  │                │                  │  │
│  │                ▼                  │  │
│  │  ┌─────────────────────────────┐  │  │
│  │  │        IDENTIFIER           │  │  │
│  │  │      HYPERPARAMETER         │  │  │
│  │  │     SETTING PROCESSING      │  │  │
│  │  └─────────────────────────────┘  │  │
│  └ ─ ─ ─ ─ ─ ─ ─ ─│─ ─ ─ ─ ─ ─ ─ ─ ─ ┘  │
│                   ▼                      │
│     ┌─────────────────────────────┐      │
│     │   QUALITY DETERMINATION     │      │
│     │        IDENTIFIER           │      │
│     └─────────────────────────────┘      │
│                                          │
│        TREE STRUCTURE FILTER             │
│             SEQUENCE                     │
└─────────────────────────────────────────┘
```

(c)

```
┌─────────────────────────────────────────┐
│  ┌ ─ ─ ─ ─ ─ ─ ─ ─ ─ ─ ─ ─ ─ ─ ─ ─ ─ ┐  │
│  │  ┌─────────────────────────────┐  │  │
│  │  │      IMAGE CONVERSION       │  │  │
│  │  │         PROCESSING          │  │  │
│  │  └─────────────────────────────┘  │  │
│  │                │                  │  │
│  │                ▼                  │  │
│  │  ┌─────────────────────────────┐  │  │
│  │  │       IMAGE FEATURE         │  │  │
│  │  │   EXTRACTION PROCESSING     │  │  │
│  │  └─────────────────────────────┘  │  │
│  │                │                  │  │
│  │                ▼                  │  │
│  │  ┌─────────────────────────────┐  │  │
│  │  │        IDENTIFIER           │  │  │
│  │  │      HYPERPARAMETER         │  │  │
│  │  │     SETTING PROCESSING      │  │  │
│  │  └─────────────────────────────┘  │  │
│  └ ─ ─ ─ ─ ─ ─ ─ ─│─ ─ ─ ─ ─ ─ ─ ─ ─ ┘  │
│                   ▼                      │
│     ┌─────────────────────────────┐      │
│     │  DEFECTIVE-MODE-INCLUDED     │      │
│     │  QUALITY DETERMINATION       │      │
│     │        IDENTIFIER           │      │
│     └─────────────────────────────┘      │
│                                          │
│        TREE STRUCTURE FILTER             │
│             SEQUENCE                     │
└─────────────────────────────────────────┘
```

(b)

| IMAGE FILE | CORRECT ANSWER |
|------------|----------------|
| file003 | -1 |
| file004 | -2 |
| file005 | -1 |
| ... | ... |
| file100 | -3 |

# FIG. 10

```
         ┌─────────────┐
         │    START    │
         └──────┬──────┘
                │                                 ┌S10
    ┌───────────▼─────────────────────┐
    │      ACQUIRE LEARNING IMAGE      │
    └───────────┬─────────────────────┘
                │                                 ┌S12
    ┌───────────▼─────────────────────┐
    │   ACQUIRE LEARNING CORRECT DATA  │
    └───────────┬─────────────────────┘
                │                                 ┌S14
    ┌───────────▼─────────────────────┐
    │  CREATE CORRECT DATA FOR QUALITY │
    │ DETERMINATION AUTOMATIC GENERATION│
    └───────────┬─────────────────────┘
                │                                 ┌S16
    ┌───────────▼─────────────────────┐
    │     GENERATE INITIAL INDIVIDUAL  │
    └───────────┬─────────────────────┘
                │                                 ┌S18
    ┌───────────▼─────────────────────┐
    │ GENERATION CHANGE PROCESSING OF  │
    │   QUALITY DETERMINATION PROGRAM  │
    └───────────┬─────────────────────┘
                │                                 ┌S20
     NO    ╱────▼──────────────────╲
    ◄──────  TERMINATE LEARNING?    ╲
           ╲──────────┬────────────╱
                      │ YES                       ┌S22
    ┌─────────────────▼────────────────┐
    │ SET HYPERPARAMETER OF DEFECTIVE-  │
    │ MODE-INCLUDED QUALITY DETERMINATION
    │           IDENTIFIER              │
    └─────────────────┬────────────────┘
                      │                           ┌S23
    ┌─────────────────▼────────────────┐
    │ ADJUST HYPERPARAMETER BY          │
    │ NEIGHBORHOOD GRID SEARCH          │
    └─────────────────┬────────────────┘
                      │                           ┌S24
    ┌─────────────────▼────────────────┐
    │ GENERATE DEFECTIVE-MODE-INCLUDED  │
    │ QUALITY DETERMINATION IDENTIFIER  │
    └─────────────────┬────────────────┘
                      │
               ┌──────▼──────┐
               │     END     │
               └─────────────┘
```

# FIG. 11

S18

```
                           START
                             │
                             ▼                            ┌ S48
        ┌──────────────────────────────────────────────┐
        │ SELECT PARENT INDIVIDUAL FROM POPULATION AND  │
        │ GENERATE CHILD INDIVIDUAL GROUP BY EVOLUTION  │
        │                  PROCESS                      │
        └──────────────────────────────────────────────┘
                             │
          ┌──────────────────▼──────────────────────────┐  ┌ S50
          │            SELECT CHILD INDIVIDUAL           │
          └──────────────────┬──────────────────────────┘
                             │                            ┌ S52
          ┌──────────────────▼──────────────────────────┐
          │              CALCULATE FITNESS               │
          └──────────────────┬──────────────────────────┘
                             │                       ┌ S54
                             ▼                                     NO
                  ◇  FITNESS > THRESHOLD?  ◇ ──────────────────┐
                             │                                  │
                             │ YES                     ┌ S56    │
          ┌──────────────────▼──────────────────────────┐      │
          │ SET HYPERPARAMETER OF DEFECTIVE-MODE-        │      │
          │ INCLUDED QUALITY DETERMINATION IDENTIFIER    │      │
          └──────────────────┬──────────────────────────┘      │
                             │                       ┌ S58      │
          ┌──────────────────▼──────────────────────────┐      │
          │ CROSS-VALIDATION OF DEFECTIVE-MODE-INCLUDED  │      │
          │     QUALITY DETERMINATION IDENTIFIER         │      │
          └──────────────────┬──────────────────────────┘      │
                             │                       ┌ S60      │
          ┌──────────────────▼──────────────────────────┐      │
          │             RECALCULATE FITNESS              │      │
          └──────────────────┬──────────────────────────┘      │
                             │◄──────────────────────────────────┘
       NO                    │                      ┌ S62
    ◄────── ◇  FINISH CHILD INDIVIDUALS?  ◇
                             │ YES                  ┌ S64
          ┌──────────────────▼──────────────────────────┐
          │           REPLACE BEST INDIVIDUAL            │
          └──────────────────┬──────────────────────────┘
                             ▼
                          RETURN
```

# FIG. 12

# EP 3 822 872 A1

## INTERNATIONAL SEARCH REPORT

| International application No. |
| --- |
| PCT/JP2018/025849 |

**A. CLASSIFICATION OF SUBJECT MATTER**
Int.Cl. G06N99/00(2010.01)i, G06F8/00(2018.01)i, G06N3/12(2006.01)i,
G06T7/00(2017.01)i

According to International Patent Classification (IPC) or to both national classification and IPC

**B. FIELDS SEARCHED**

Minimum documentation searched (classification system followed by classification symbols)
Int.Cl. G06N99/00, G06F8/00, G06N3/12, G06T7/00

Documentation searched other than minimum documentation to the extent that such documents are included in the fields searched
```
Published examined utility model applications of Japan      1922-1996
Published unexamined utility model applications of Japan    1971-2018
Registered utility model specifications of Japan            1996-2018
Published registered utility model applications of Japan    1994-2018
```

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-26982 A (PANASONIC ELECTRIC WORKS SUNX CO., LTD.) 09 February 2012, paragraphs [0016]-[0050], fig. 1-5 (Family: none) | 1-19 |
| A | JP 8-96136 A (KAWASAKI HEAVY IND LTD.) 12 April 1996, paragraphs [0013]-[0023], fig. 1, 6-9 (Family: none) | 1-19 |
| A | JP 2014-126445 A (SHARP CORPORATION) 07 July 2014, paragraphs [0037]-[0052], fig. 1, 4, 5 (Family: none) | 1-19 |

☐ Further documents are listed in the continuation of Box C.  ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 25.09.2018 | 09.10.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017068675 A